**Europäisches Patentamt**

**European Patent Office**

**Office européen des brevets**

(19)

(11) Veröffentlichungsnummer: **0 208 850**
**A2**

(12)

# EUROPÄISCHE PATENTANMELDUNG

(21) Anmeldenummer: 86105745.3

(22) Anmeldetag: 25.04.86

(51) Int. Cl.⁴: **F 16 L 37/08**

(30) Priorität: 16.07.85 DE 3525402

(43) Veröffentlichungstag der Anmeldung: 21.01.87
Patentblatt 87/4

(84) Benannte Vertragsstaaten: **FR GB IT SE**

(71) Anmelder: **THYSSEN PLASTIK ANGER KG, Anzinger
Strasse 1, D-8000 München 80 (DE)**

(72) Erfinder: **Schwarzensteiner, Hermann, Girletweg 5,
D-8447 Windberg (DE)**

(54) Schnellverbinder.

(57) Mit der Erfindung wird eine Schnellverbindung vorgeschlagen, die vielseitig einsetzbar ist, beispielsweise für
Fluidleitungen, elektrische Kabel, usw. und aus einem Einsteckrohrende besteht, das mit Einbuchtungen am Ende, die
als Rastmittel dienen, versehen ist, so wie einem Sicherungsbund als radiale Sicherung, sowie einer Muffe am
zweiten Rohrende in die ein Sicherungsring mit Rastfingern
eingesetzt ist, der mit den Einbuchtungen des Einsteckrohrendes zusammen verrastet und sich rückwärtig an der
Muffeninnenwand über dünne, umlegbare Stege abstützt.
Eine solche Schnellkupplung ist durch einfaches Eindrük-
ken verrastbar und kann nur durch eine Drehbewegung
entriegelt werden. Sie ist insbesondere geeignet, in automatisierten Fertigungen durch Industrie-Roboter hergestellt
und gelöst zu werden. Sie ist sowohl längskraftschlüssig,
als auch radial gesichert, leicht lösbar, einfach zu montieren, dicht und verschmutzungssicher. Die einzelnen Teile,
nämlich die Rohrenden und der Sicherungsring bestehen
vorzugsweise aus Kunststoffen, die dem jeweiligen Einsatzgebiet der Steckverbindung am besten entsprechen, z.B.
Polyamide, PVC, (Polyäthersulfon, Polyätherketon), oder
dergl., sie können aus starrem oder flexiblem Werkstoff
bestehen.

Thyssen Plastik Anger KG, 8000 München 80

# S C H N E L L V E R B I N D E R

Die Erfindung bezieht sich auf einen Schnellverbinder, beispielsweise eine Kupplung für Fluidleitungen untereinander oder mit Rohrstutzen, bzw. Behälteranschlüssen, elektrische Kabel, Maschinenteile, usw, die in ihrer Wirkstellung einrastet, wobei das eine Rohrende oder dergl. eine Muffe für den Einschub des anderen Rohrendes oder dergl. aufweist.

Schnellkupplungen für Rohre usw. sind bekannt. Sie sind mittels in deren Gehäuse einschnappbare Haltevorrichtungen in ihrer Wirkstellung zu verriegeln, wobei,wie z. B. in der DE-OS 31 43 015 dargestellt, die Haltevorrichtung mit einem ringförmigen Vorsprung an der Rohrleitung zusammenwirkt. Bei anderen Schnellverbindungen sind Bohrungen vorgesehen, in die eingesetzte Stifte oder dergl. die ineinander gesteckten Rohrenden am selbsttätigen Lösen hindern.

Diese Rohrverbindungen sind mit Nachteilen behaftet. So sind beispielsweise in automatisierten Fertigungsbetrieben, wie der KFZ-Industrie, Rohre, Schläuche, Kabel, etc. von automatisch arbeitenden Vorrichtungen zu verbinden, um den Fertigungsablauf zu rationalisieren, wozu die bekannten Schnellverbindungen jedoch nicht geeignet sind. Außerdem sind die bisher üblichen Schnellverbindungen aus unterschiedlichen Werkstoffen aufgebaut, meist Metall und Kunststoff, die für die Einzelteile des Kupplungsmechanismus verwendet werden. Ein weiterer Nachteil ist darin zu sehen, daß diese Schnellverbindungen aufwendig konstruiert und daher teuer sind.

Hier will die Erfindung Abhilfe schaffen. Der Erfindung liegt daher die Aufgabe zugrunde, eine Schnellkupplung für Rohre oder dergl. zu besitzen, die einfach aufgebaut, billig in der Herstellung und automatisierungsgerecht hinsichtlich Fertigung, Montage und Verbindung, sowie Lösen derselben, ist.

Erfindungsgemäß wird dies dadurch erreicht, daß in der Muffe des einen Rohrendes ein Ring mit mehreren in den Spalt zwischen Muffenraum und eingeschobenen Rohrende konzentrisch zu diesem sich erstreckenden axialen Rastmitteln eingesetzt ist, die in damit korrespondierende Rastmittel des eingesteckten Rohrendes eingreifen, oberhalb der Rastmittel des eingeschobenen Rohrendes, weitere radiale Rast- und Zentriermittel vorgesehen sind, die in Gegenstücke am Muffenrand eingreifen.

Vorteilhafterweise ist in einer Ringrille der Muffe des einen Rohrendes ein Sicherungsring mit mehreren axial sich in den Muffenspalt sich erstreckenden und mit schräg in Richtung auf das eingesteckte Rohrende abgewinkelten, radial federnden Rastfingern eingesetzt, das eingesteckte Rohrende mit Einbuchtungen für den Eingriff der Rastfinger versehen und in der Höhe des Muffenrandes mit einem exzentrisch umlaufenden und mindestens mit einem Einschnitt

3

versehenen Sicherungsbund versehen, der in Vorsprünge des Muffenrandes eingreift.

Vorteilhafterweise verlaufen die äußeren Ränder des Sicherungsbundes und des Muffenrandes parallel zueinander und zwischen dem, bzw. den Einschnitten und Vorsprüngen von etwa koaxial bis 45° Neigung zur Rohrwandung.

Vorteilhafterweise ist die Rückseite der Rastfinger zumindest in deren abgewinkelten Bereich mit dünnen, in Umfangsrichtung beweglichen Stegen versehen.

Vorteilhafterweise ist unterhalb des Muffenraumes eine Ringrille für den Dichtring vorgesehen.

Vorteilhafterweise besteht der Sicherungsring aus Kunststoff.

Vorteilhafterweise besteht mindestens eines der zu verbindenden Rohrenden aus Kunststoff.

Vorteilhafterweise ist der Sicherungsbund am Einsteckrohrende angeformt.

Vorteilhafterweise besteht der Sicherungsring und mindestens eines der beiden zu verbindenden Rohrenden aus unterschiedlichen Kunststoffen.

Hierdurch ergibt sich der Vorteil einer einfachen Herstellung, schnellen und einfachen Montage bei der Fertigung.

0208850

4

Die Kupplung der beiden Rohrenden geschieht durch leichtes Eindrücken bis zum Einrasten der abgewinkelten Enden der Rastfinger in die Einbuchtungen des Rohrendes, wobei auch dessen Sicherungsbund mit den Vorsprüngen des Muffenrandes bei dem gleichen Vorgang in Eingriff kommt. Dieser Kupplungsvorgang ist automatisierungsgerecht. Er ist ebenso wie das Lösen der Verbindung, was durch Drehen eines Rohrendes aus der Raststellung und axiales Abziehen vom anderen Rohrende vorgenommen wird, von Industrie-Robotern durchführbar. Dadurch ergibt sich ein großer Rationalisierungseffekt bei automatisch ablaufenden Fertigungsvorgängen, wie z.B. in der Automobil-Industrie, da ein manuelles Eingreifen in den Fertigungsvorgang lediglich zum Verbinden, bzw. Lösen von Fluidleitungen oder dergl. untereinander, oder mit Behältern entfällt. Die so hergestellte Verbindung ist außerdem dicht, formstabil und längskraftschlüssig,sowie axial und radial verriegelt.

Die Erfindung ist nachstehend anhand eines in den Abbildungen dargestellten Ausführungsbeispieles näher erläutert.

Es zeigt:
Figur 1  eine perspektivische Darstellung der Rohrverbindung,
Figur 2  einen Längsschnitt durch den Kupplungsbereich, und
Figur 3  einen Schnitt durch Figur 2 in Richtung A-A.

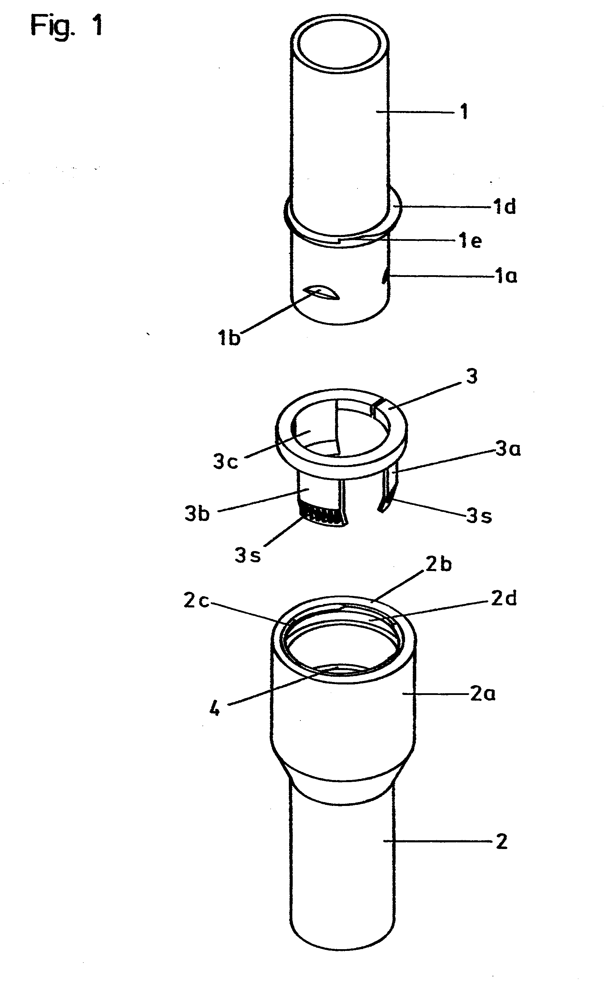

In der Figur 1 ist oben ein erstes Rohrende, das sog. Einsteckrohrende 1, dargestellt, das in seinem Endbereich

5

mehrere Einbuchtungen 1a, 1b, (1c ist verdeckt), als Rastmittel aufweist und darüber einen exzentrisch umlaufenden Sicherungsbund 1d besitzt, dessen Rand von dem Einschnitt 1e an bis zur Mündung in diesen Ausschnitt unterschiedliche Neigungswinkel aufweist.

Diesem Einsteckrohrende 1 steht das Rohrende 2, das mit einer Muffe 2a versehen ist, gegenüber. Der Rand der Muffe 2a weist einen Vorsprung 2b für den Ausschnitt 1e des Sicherungsbundes 1d am Einsteckrohrende 1 auf, wobei der dem Muffenraum zugewandte Rand des Muffenrandes in seiner Neigung korrespondierend zu dem des Sicherungsbundes 1d ausgebildet ist.

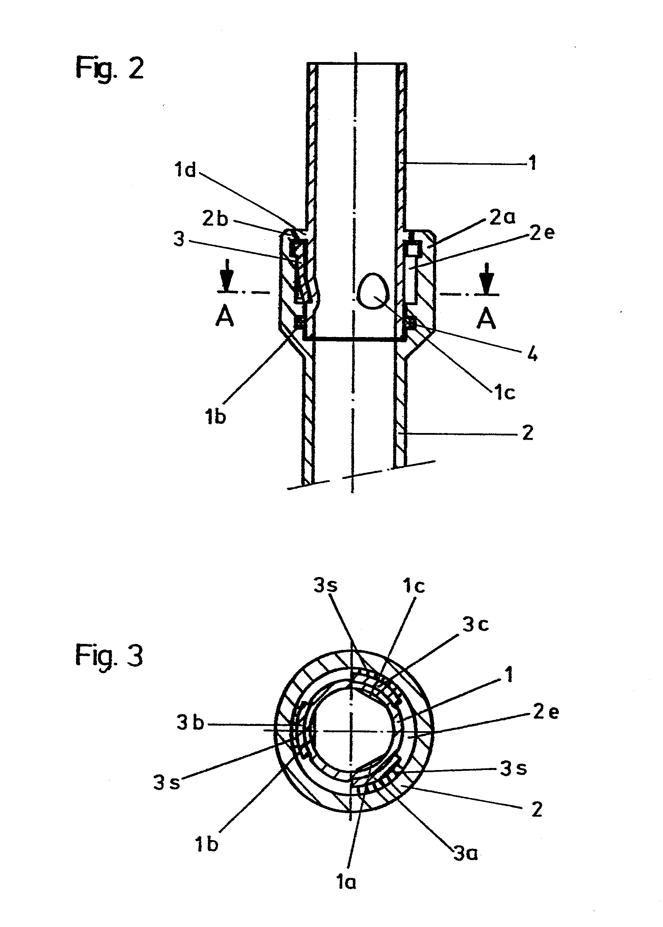

In die Ringrille 2d der Muffe 2a ist der Sicherungsring 3 mit seinen in den Ringspalt 2c (Figur 2) zwischen dem Einsteckrohrende 1 und dem Innenraum der Muffe 2a ragenden Rastfingern 3a, 3b, 3c eingesetzt. Diese Rastfinger 3a bis 3c sind an ihrem Ende leicht nach innen in Richtung auf das Einsteckrohrende 1 abgewinkelt, um in die Einbuchtungen 1a, 1b, 1c desselben einrasten zu können. Die Rückseite der Rastfinger 3a, 3b, 3c ist mit dünnwandigen Stegen ausgerüstet.

Mit 4 ist ein Dichtring bezeichnet, der am Ende der Muffe 2a angeordnet ist.

Die Figur 2 zeigt die Schnellkupplung in ihrer Wirkstellung, nachdem das Einsteckrohrende 1 in die Muffe 2a des Rohrendes 2 eingedrückt und damit verrastet ist. Beim Eindrücken des Einsteckrohrendes 1 in die Muffe 2a werden die Rastfinger 3a, 3b, 3c leicht nach außen an die Muffeninnenwand gedrückt, wo sie sich mit den Stegen 3s abstützen. Sie federn, nachdem die Einbuchtungen 1a, 1b, 1c in deren Bereich kommen, in diese Einbuchtungen hinein und verriegeln somit die beiden Rohrenden 1 und 2 miteinander in axialer Richtung. Die Sicherung der Rohrkupplung in radialer Richtung erfolgt über den Sicherungsbund 1d am Einsteckrohrende 1, der mit dem Rand 2b der Muffe 2a durch das Eingreifen des Einschnittes 1e in den Vorsprung 2c verrastet.

Das Lösen der Verbindung zwischen den Rohren 1 und 2 erfolgt durch eine Drehung des einen Rohrendes gegenüber dem anderen, im dargestellten Beispiel um etwa 60° . Beim Drehen des einen Rohrendes gegenüber dem anderen, also beispielsweise des Rohrendes 1 werden die Rastfinger 3a, 3b, 3c aus den Einbuchten 1a, 1b, 1c am Rohrende herausgehoben, wobei die dünnwandigen Stege 3s an der Rückseite der Rastfinger 3a, 3b, 3c sich umlegen und damit ein Herausgleiten der Rastfingerenden aus den Einbuchtungen ermöglichen. Ein Lösen der Verbindung durch Ziehen in axialer Richtung ist somit nicht möglich. Auch ein selbsttätiges Lösen ist ausgeschlossen. Beim Drehen des Rohrendes 1 wird außerdem die Rastung zwischen dem Sicherungsbund 1d und dem Muffenrand 2b gelöst, indem durch das Drehen das Rohrende 1 über den exzentrisch umlaufenden Sicherungsbund 1d, dessen Rand unterschiedliche Neigungswinkel aufweist, auf dem Muffenrand 2b aufgleitet, wodurch die radiale Sicherung zwischen dem Einschnitt 1e des Sicherungsbundes und dem Vorsprung 2c des Muffenrandes 2b, gelöst wird. Die beiden Rohrenden können dann voneinander abgenommen werden.

Die beiden Rohrenden 1 und 2 sind, ebenso wie der Sicherungsring 3, aus Kunststoff gefertigt. Vorzugsweise ist der Sicherungsring 3 aus einem Polyamid gefertigt, während die beiden Rohrenden beispielsweise aus PVC bestehen. Die Kunststoffe sind dem jeweiligen Einsatzgebiet der Steckverbindung zu wählen, ob die Rohrenden starr oder flexibel ausgebildet sein sollen, spielt dabei eine Rolle. Als Kunststoffe haben sich u.a. auch Polyäthersulfone und Polyätherketone als geeignet erwiesen. Selbstverständlich können anstelle des vorzuziehenden Werkstoffes Kunststoff auch andere Werkstoffe für die einzelnen Teile eingesetzt werden.

Besteht das Rohrende 1 aus Kunststoff, so können die Einbuchtungen 1a, 1b, 1c, sowie der Sicherungsbund 1d in einem Urformprozess erzeugt werden. Das gleiche gilt für Rohrende 2 mit seiner Muffe 2a und den Sicherungsring 3.

Die Erfindung ist selbstverständlich nicht auf das in dem Ausführungsbeispiel erläuterte Anwendungsgebiet beschränkt. Der Gegenstand der Erfindung ist nicht nur als Rohrverbindung einsetzbar, sondern auch zur Verbindung von elektrischen Kabeln, Maschinenteilen, usw. vorteilhaft geeignet. Auch ist die Verbindung nicht darauf beschränkt, daß im Winkel von 120° angeordnete

0208850

Rastfinger 3a, 3b, 3c, und eine entsprechende angeordnete Anzahl von Einbuchtungen 1a, 1b, 1c am Einsteckrohrende 1 vorgesehen sind, vielmehr kann die Anordnungsweise variiert werden. Gleiches gilt für die Ausbildung des Sicherheitsbundes 1d mit seinem Ausschnitt 1e und dem Rand 2b der Muffe 2a mit dem Vorsprung 2c.

Thyssen Plastik Anger KG, 8000 München 80

# S C H N E L L V E R B I N D E R

P a t e n t a n s p r ü c h e

1.) Schnellverbinder, beispielsweise eine Kupplung für Fluidleitungen untereinander oder mit Rohrstutzen, bzw. Behälteranschlüssen, elektrischen Kabeln, Maschinenteilen usw., die in ihrer Wirkstellung einrastet, wobei das eine Rohrende oder dergl. eine Muffe für den Einschub des anderen Rohrendes oder dergl. aufweist, dadurch gekennzeichnet, daß in der Muffe (2a) des einen Rohrendes (2) ein Sicherungsring (3) mit mehreren in den Spalt (2e) zwischen Muffenraum und eingeschobenen Rohrende (1) konzentrisch zu diesem sich erstreckenden axialen Rastmitteln eingesetzt ist, die in damit korrespondierende Rastmittel des eingeteckten Rohres (1) eingreifen, oberhalb der Rastmittel des eingeschobenen Rohrendes (1) weitere radiale Rast- und Zentriermittel vorgesehen sind, die in Gegenstücke am Muffenrand (2b) eingreifen.

2.) Schnellverbinder nach Anspruch 1, dadurch gekennzeichnet, daß in einer Ringrille (2d) der Muffe (2a) des einen Rohrendes (2) ein Sicherungsring (3) mit mehreren axial sich in den Muffenspalt sich erstreckenden und mit schräg in Richtung auf das eingesteckte Rohrende (1) abgewinkelten, radial federnden Rastfingern (3a, 3b, 3c) eingesetzt, das eingesteckte Rohrende (1) mit Einbuchtungen (1a, 1b, 1c) für den Eingriff der Rastfinger (3a, 3b, 3c) versehen und in der Höhe des Muffenrandes (2b) mit einem exzentrisch umlaufenden und mindestens mit einem Einschnitt versehenen Sicherungsbund (1d) versehen ist, der in Vorsprünge (2c) des Muffenrandes (2b) eingreift.

3.) Schnellverbinder nach Anspruch 1 und 2, dadurch gekennzeichnet, daß die äußeren Ränder (1e) des Sicherungsbundes (1d) und des Muffenrandes (2b) parallel zueinander und zwischen dem, bzw. den Einschnitten und Vorsprüngen von etwa koaxial bis 45° Neigung zur Rohrwandung verlaufen.

4.) Schnellverbinder nach Anspruch 1 bis 3, dadurch gekennzeichnet, daß die Rückseite der Rastfinger (3a, 3b, 3c) zumindest in deren abgewinkelten Bereich mit dünnen, in Umfangsrichtung beweglichen, Stegen (3s) versehen ist.

5.) Schnellverbinder nach Anspruch 1 bis 4, dadurch gekennzeichnet, daß unterhalb des Muffenraumes eine Ringrille (2d) für den Dichtring (4) vorgesehen ist.

6.) Schnellverbinder nach Anspruch 1 bis 5, dadurch gekennzeichnet, daß der Sicherungsring (3) aus Kunststoff besteht.

7.) Schnellverbinder nach Anspruch 1 und einem der folgenden, dadurch gekennzeichnet, daß mindestens eines der zu verbindenden Rohrenden (1, 2) aus Kunststoff besteht.

8.) Schnellverbinder nach Anspruch 1 und einem der folgenden, dadurch gekennzeichnet, daß der Sicherungsbund (1d) am Einsteckrohrende (1) angeformt ist.

9.) Schnellverbinder nach Anspruch 1 und einem der folgenden, dadurch gekennzeichnet, daß der Sicherungsring (3) und mindestens eines der beiden zu verbindenden Rohrenden (1, 2) aus unterschiedlichen Kunststoffen besteht

Fig. 1

0208850

Fig. 2

Fig. 3